# EUROPEAN PATENT SPECIFICATION

(11) **EP 3 644 093 B1**
(45) Date of publication and mention of the grant of the patent: **08.01.2025**
(21) Application number: 19197062.3
(22) Date of filing: 12.09.2019
(51) Int. Cl.: G01S 17/86, G01S 17/66, G01S 17/87, G01S 17/88, A63B 24/00

(54) **METHOD AND CONTROLLER FOR TRACKING MOVING OBJECTS**
VERFAHREN UND STEUERGERÄT ZUR VERFOLGUNG BEWEGLICHER OBJEKTE
PROCÉDÉ ET APPAREIL DE COMMANDE DE SUIVI D'OBJETS EN MOUVEMENT

(30) Priority: 25.10.2018 SE 1851325
(43) Date of publication of application: 29.04.2020
(73) Proprietor: iReality AB, 103 62 Stockholm (SE)
(72) Inventor: TUONONEN, Magnus, 114 57 Stockholm (SE); KLEVENSTEDT, Bo, 114 60 Stockholm (SE)
(74) Representative: Bergenstråhle & Partners AB

(56) References cited:
- WO-A1-2011/116421
- DE-A1- 102013 102 153
- US-A1- 2009 046 152
- US-A1- 2018 067 199
- US-B1- 9 661 470

## Description

### Technical field

The present invention relates generally to a method and a controller for tracking moving objects in an environment of an event, especially real-time tracking.

### Background art

Events such as horse races, track and field meetings, bicycle races etc. usually have an audience that want to follow the event. As technology develops and becomes more prevalent the number of applications for such technology also increases. One such area is tracking of moving objects at different events. The systems that are used today for tracking require more or less human intervention in order to function properly. Such human intervention may for example be to attach sensors to objects, identifying activities etc.

For example, US patent no. 9,661,470 discloses methods and systems for locating an actor in an environment. For example, an information system may receive point cloud data representing a cluster of potential actors at a location in the environment. In addition, the information system may also receive location information from a device indicating that the current location of the device is proximate to the location of the cluster of potential actors.

The system in US patent no. 9,661,470 may use different sensors as inputs, such as depth sensors, laser-based sensors and/or camera systems. When using different data sources as input, the data from the various sources may be time-stamped such that a controller may use data from the various sources in order to determine where the actor is.

The problem with US patent no. 9,661,470 is that it is limited when it comes to handling objects with higher speed than an actor, such as race horses.

WO11116421 discloses tracking of objects in order to determine the position of the object and/or the progress and performance of the object over time. The object may for example be race horses. In one embodiment a jockey wears a small infra-red beacon that is recognized by a video camera. This information is used to determine the movement and position of the race horse. The solution in WO11116421 is complicated and requires human intervention when applying the infra-red beacon onto the helmet of the jockey.

Thus, there is a need of a method in which moving objects can be followed without human intervention and which method also can follow objects having a high speed. There is also a need for a controller that is configured to perform such a method.

### Summary of invention

An object of the present invention is to accomplish a method for tracking moving objects, which reduces human intervention, and which is capable of tracking objects with high speed, such as race horses.

According to one aspect of the present invention this is accomplished by a method for tracking moving objects in an environment of an event. Each moving object comprises an associated identity marking and different key portions, wherein the key portion being used to determine which moving object is first to finish, such as the nose of a horse or the chest of an athlete. The method is performed by a controller and comprises receiving images from a camera having a field-of-view in a section of the environment, identifying moving objects in the received images and separate these moving objects from a background of the environment, determining position coordinates of the associated identity markings and the different key portions of each moving object, receiving a first set of data points representing position coordinates in a field of view of a first Light Detection And Ranging, LIDAR, device, receiving a second set of data points representing position coordinates in a field of view of a second LIDAR device, wherein the field of view of the second LIDAR device is partly overlapping the field of view of the first LIDAR device, separating data points representing the moving objects from data points representing a background for each of the first and the second set of data points, modelling the position of each moving object as a two-dimensional probabilistic distribution, calculating a weighted mean value for the position coordinates of the moving objects based on the first and second set of data points giving more weight to the set of data points that represents moving objects closest to one of the first and second LIDAR device, wherein the weighted mean is calculated as inversely proportional to the variances of the moving objects, and reconstructing the position in the environment and the associated identity marking for the moving objects in a particular point of time.

In another exemplary embodiment a synchronizing signal is generated by a synchronization module and fed to the camera and to the first and second LIDAR. The synchronizing between the received images from the camera and the received first and second set of data points from the first and second LIDAR may be made with an accuracy of 5 to 10 ms.

According to another aspect of the present invention this is accomplished by a controller for tracking objects in an environment of an event. Each moving object comprising an associated identity marking and different key portions, wherein the key portion being used to determine which moving object is first to finish, such as the nose of a horse or the chest of an athlete, the controller comprises a processor and a non-transitory computer-readable medium, configured to store instructions, which when executed by the processor, cause the controller to receive images from a camera having a field-of-view in a section of the environment, identify moving objects in the received images and separate these moving objects from a background of the environment, determine position coordinates of the associated identity markings and the different key portions of each moving object, receive a first set of data points representing position coordinates in a field of view of a first Light Detection And Ranging, LIDAR, device, receive a second set of data points representing position coordinates in a field of view of a second LIDAR device, wherein the field of view of the second LIDAR device is partly overlapping the field of view of the first LIDAR device, separate data points representing the moving objects from data points representing a background for each of the first and the second set of data points, model the position of each moving object as a two-dimensional probabilistic distribution, calculate a weighted mean value for the position coordinates of the moving objects based on the first and second set of data points giving more weight to the set of data points that represents moving objects closest to one of the first and second LIDAR device, wherein the weighted mean is calculated as inversely proportional to the variances of the moving objects, and reconstruct the position in the environment and the associated identity marking for the moving objects in a particular point of time.

According to yet another aspect of the present invention this is accomplished by computer program comprising computer program code, wherein the computer program code is adapted, if executed on a processor, to implement the above described method. The present invention also relates to a computer program product comprising a computer readable storage medium, having the computer program stored thereon.

### Brief description of drawings

The invention is now described, by way of example, with reference to the accompanying drawings, in which:
Fig. 1 shows a schematic view of a race track.
Fig. 2 shows a race horse with an identity tag and a jockey.
Fig. 3 shows a schematic overview of a system for tracking moving objects.
Fig. 4 shows a schematic view of a controller.
Fig. 5 shows a flow chart of a method for tracking moving objects.

### Description of embodiments

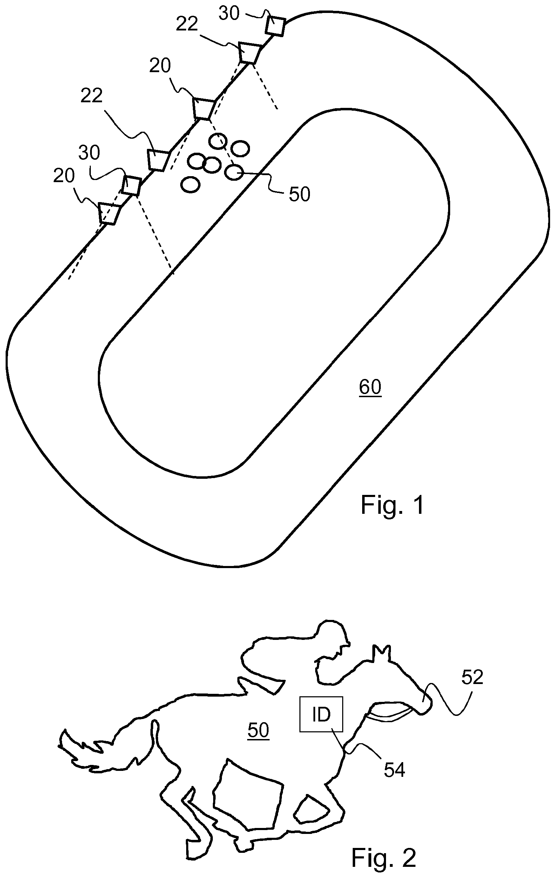

In the following, a detailed description of the present invention will be made using a race track for horses as an example. However, it should be understood that the present invention is applicable to a lot of different application where tracking of moving objects is desirable, such as track and field meetings, bicycle races, etc. **Fig. 1** shows a schematic view of a race track 60. In this case the race track has the shape of an oval, which may correspond to a race track for horses. The moving objects 50 are shown as small circles on the race track 60. In order not to smudge Fig. 1 only one of the small circles has been donated with the reference numeral 50. Along the race track there are provided a number of cameras 30 and a number of Light Detection And Ranging (LIDAR) devices 20, 22. Even though only a few cameras 30 and LIDAR devices 20, 22 are shown, it should be understood that there are cameras 30 and LIDAR devices 20, 22 provided all around the track 60, such that the moving objects 50 can be tracked along the entire track.

As will be more closely described below the cameras 30 primarily object is to identify moving objects 50 and separate these moving objects 50 from the background of the environment, calculate coordinates of key points of the moving objects 50 and convert the resulting coordinates to a track coordinate system. There are today many different types of cameras 50 that may be used together with the present invention. It is to believe to within the skills of a person skilled in the art to select a suitable camera. Since both cameras 30 and LIDAR devices 20, 22 are used there is no requirement that the cameras 30 cover the entire track, but they should preferably cover about 40-50% of the track. Each camera 30 will have a fixed position and orientation and cover about 20 meters of track length, i.e. there will be around 20 cameras for covering a track of 1 km. During use the cameras 30 are operable in manual focus/manual shutter speed mode, which enables catching fast moving objects 50.

The primarily object of the LIDAR devices 20, 22 is to separate moving objects points background points of the environment and convert the resulting coordinates to a track coordinate system. In one exemplary embodiment there are 10 LIDAR devices 22, 22 used to cover a track of 1 km.

Now turning to **Fig. 2** a race horse, i.e. the moving object 50, with an identity tag 54 and a jockey is shown. The identity tag 54 is preferably the starting number of the horse 50. Using an already present identity tag 54, will increase the efficiency of the tracking system compared to prior art, which may rely on applying infra-red beacons or the like as described in the background section. Fig. 2 also shows a key portion 52 of the race horse 50, in this case the key portion 52 is the nose of the horse 50. The key portions 52 may vary depending on the moving objects and may be used to determine which horse 50 is first to finish. If the present invention is applied in track and field the key portion may be the chest of an athlete.

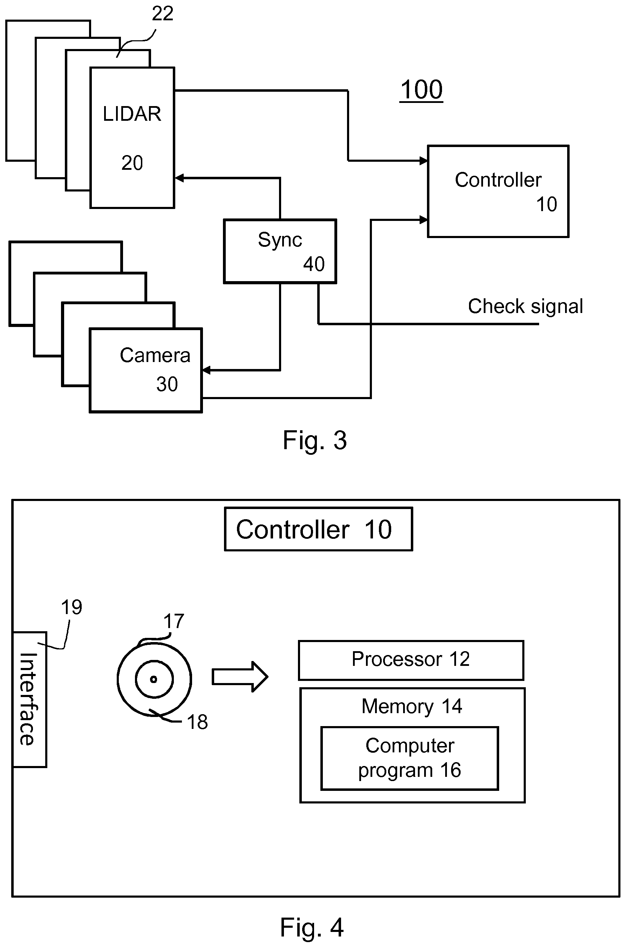

**Fig. 3** shows an overall schematic overview of a system for tracking the moving objects 50. The system comprises, as mentioned above, cameras 30 and LIDAR devices 20, 22. Furthermore, the system comprises a synchronization module 40 and a controller 10, which may be a local server on the race track on-track. The synchronization module 40 may use Network Time Protocol (NTP) for synchronizing all devices, i.e. the cameras 30, the LIDAR devices 20, 22 and the controller 10.

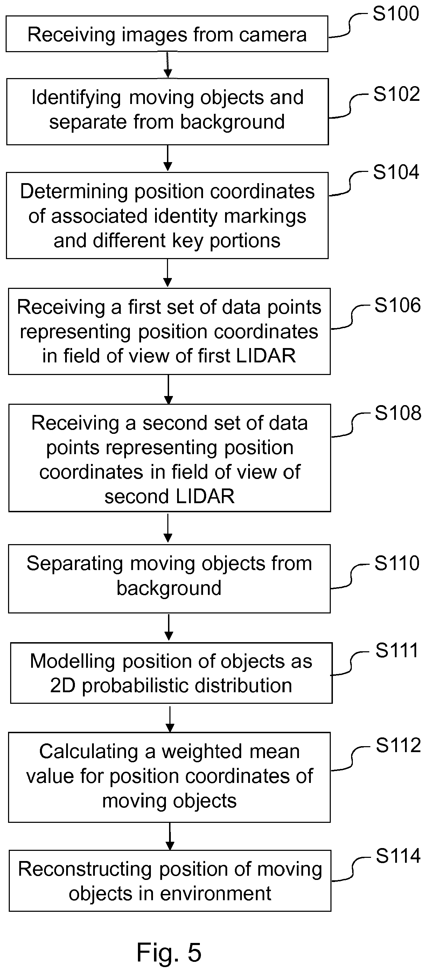

The controller 10 is schematically shown in **Fig. 4** and is configured to and operable for performing the method to be described in conjunction with Fig. 5. The controller 10 comprises a processor 12 and a memory 14. In context of the present application the term processor 10 should be interpreted broadly as processing circuitry, which may comprise one or more programmable processor, application-specific integrated circuits, field programmable gate arrays or combinations of these (not shown) adapted to execute instructions. The memory 14 contains instructions executable by said processing circuitry, whereby the controller 10 is operative for receiving images from the camera 30, identifying moving objects 50 in the received images and separate these moving objects 50 from a background of the environment, determining position coordinates of associated identity markings 54 and the different key portions 52 of each moving object 50, receiving a first set of data points representing position coordinates in a field of view of a first Light Detection And Ranging, LIDAR, device 20, receiving a second set of data points representing position coordinates in a field of view of a second LIDAR device 22, the field of view of the second LIDAR device 22 is partly overlapping the field of view of the first LIDAR device 20, separating data points representing the moving objects 50 from data points representing a background for each of the first and the second set of data points, calculating a weighted mean value for the position coordinates of the moving objects 50 based on the first and second set of data points giving more weight to the set of data points that represents moving objects closest to one of the first and second LIDAR device 20, 22, and reconstructing the position in the environment 60 and the associated identity marking 54 for the moving objects in a particular point of time.

According to other embodiments, the controller 10 may further comprise an interface 19, which may be considered to comprise conventional means for communicating with the cameras 30, the LIDAR devices 20, 22 and the synchronization module 40. The instructions executable by the processor 12 may be arranged as a computer program 16 stored e.g. in the memory 14. The processor 12 and the memory 14 may be arranged in a sub-arrangement 100. The sub-arrangement 100 may be a micro-processor and adequate software and storage therefore, a Programmable Logic Device, PLD, or other electronic component(s)/processing circuit(s) configured to perform the methods mentioned above.

The computer program 16 may comprise computer readable code means, which when run in a controller 10 causes the controller 10 to perform the steps described in any of the described embodiments of the tracking method. The computer program 16 may be carried by a computer program product connectable to the processor 12. The computer program product may be the memory 14. The memory 14 may be realized as for example a RAM (Random-access memory), ROM (Read-Only Memory) or an EEPROM (Electrical Erasable Programmable ROM). Further, the computer program may be carried by a separate computer-readable medium 17, such as a CD, DVD or flash memory, from which the program could be downloaded into the memory 14. Alternatively, the computer program may be stored on a server or any other entity connected to the tracking system and has access via the interface 19. The computer program may then be downloaded from the server into the memory 14.

Turning now to **Fig. 5** the tracking method of the present invention will be described in more detail. As mentioned above the tracking method is applicable for tracking moving objects 50 in an environment 60 of an event such as horse race, track and field meeting or the like. The present method makes use of any type of identity marking that is already present on the object to be tracked, such as the starting number of a horse, athlete or race car. Depending on the type of moving object to be tracked also different types key portions on the moving objects are determined.

In step S100 the controller 10 receives images from the camera 30 having a field-of-view in a section of the environment 60, i.e. the race track. The controller 10 identifies, in step S102, the moving objects 50 in the received images and separates these moving objects 50 from the background of the environment. The controller 10 further determines, in step S104, the position coordinates of the associated identity markings 54 and the different key portions 52 of each moving object 50, such as the start number of a race horse as identity marking and the and nose of the race horse as a key portion.

The controller 10 also receives, in step S106, a first set of data points representing position coordinates in a field of view of the first LIDAR device 20 and, in step S108, a second set of data points representing position coordinates in a field of view of the second LIDAR device 22, the field of view of the second LIDAR device 22 is partly overlapping the field of view of the first LIDAR device 20. The controller 10 separates, in step S110, data points representing the moving objects 50 from data points representing a background for each of the first and the second overlapping set of data points.

These overlapping fields may be seen as dotted lines in Fig. 1. When the moving object is moving from the field of view of one LIDAR device to the field of view of another LIDAR device 22, there will be a need for a seamless handover between the two LIDAR devices 20, 22. Thus, in context of the present description when making use of a first LIDAR device 20 and a second LIDAR device 22 it is only to denote two LIDAR devices between which hand over occurs. Thus, the second LIDAR device 22, may in next instance, as the moving objects 50 move on, be the first LIDAR device 20.

In order to ensure seamless performance of the tracking system measurements of the moving objects are taken from both LIDAR devices 20, 22 and the controller 10 calculates, in step S112, a weighted mean value for the position coordinates of the moving objects 50 based on the first and second set of data points giving more weight to the set of data points that represents moving objects closest to one of the first and second LIDAR device 20, 22. The weight calculation changes over time, the closer a moving object is to one of the LIDAR devices, the more data is obtained from the closer LIDAR device for contributing to the resulting weighted mean value and the other way around. The gradual change of weights contributes to a smooth result and overcomes any possible synchronization deviations. According to the invention, the weighted mean is calculated as inversely proportional to the variances of the moving objects 50.

It should be understood that one could use sets of data points from more than two LIDAR devices, depending if there are overlapping field of views or not. As for the LIDAR devices and cameras they are all active during a race and are continually transmitting data. If no moving objects are within the field of view for a specific camera or LIDAR device the values therefrom are discarded and are not included in any calculations.

The controller 10 then, in step S114, reconstructs the position in the environment 60 and the associated identity marking 54 for the moving objects in a particular point of time. According to the invention, the controller 10 performs a modeling step, S111, for modelling the position of each moving object 50 as a two-dimensional probabilistic distribution.

In order for the tracking system to be able to track fast moving objects with a high accuracy and no lag there will be a need to have 20 measurements per second to avoid a negative viewing experience. During a horse race, the horses may speed in gallop as high as 70 km/h, i.e. about 20 m/s, which translates to path of 1 m passed by a horse in 50 ms (50 ms is frame duration at 20 frames per second). If LIDAR device clocks are not synchronized, there will be 50 ms uncertainty as to when a measurement was taken. Thus, without an exact timestamp within a frame the positioning error can be 1 m. Also, when horse is crossing fields of view of two different LIDARs with different errors, that horse would "blow up", i.e. one key portion of the horse, such as the nose, may be shifted by 0.5 m towards a finish line (as observed by LIDAR device 1), while the other part of the key portion may be shifted by 0.5 m in the opposite direction (as observed by LIDAR 2). Thus, in order to achieve seamless work of the tracking system, i.e. inducing an error that is less than 0.1-0.2 m, a synchronization accuracy of 5-10 ms is preferred.

Furthermore, it should be understood that in addition to the above, it is also possible to apply smoothening algorithms to the results in case there is differences in calculation results received from two devices during the hand-over.

## Claims

1. A method for tracking moving objects (50) in an environment (60) of an event, each moving object (50) comprising an associated identity marking (54) and different key portions (52), wherein the key portion (52) being used to determine which moving object (50) is first to finish, such as the nose of a horse or the chest of an athlete, said method being performed by a controller (10) and comprising:
receiving (S100) images from a camera (30) having a field-of-view in a section of the environment (60),
identifying (S102) moving objects (50) in the received images and separate these moving objects from a background of the environment,
determining (S104) position coordinates of the associated identity markings (54) and the different key portions (52) of each moving object (50),
receiving (S106) a first set of data points representing position coordinates in a field of view of a first Light Detection And Ranging, LIDAR, device (20),
receiving (S108) a second set of data points representing position coordinates in a field of view of a second LIDAR device (22), the field of view of the second LIDAR device (22) is partly overlapping the field of view of the first LIDAR device (20),
separating (S110) data points representing the moving objects (50) from data points representing a background for each of the first and the second set of data points,
modelling (S111) the position of each moving object (50) as a two-dimensional probabilistic distribution,
calculating (S112) a weighted mean value for the position coordinates of the moving objects (50) based on the first and second set of data points giving more weight to the set of data points that represents moving objects closest to one of the first and second LIDAR device (20; 22), wherein the weighted mean is calculated as inversely proportional to the variances of the moving objects (50), and
reconstructing (S114) the position in the environment (60) and the associated identity marking (54) for the moving objects in a particular point of time.

2. The method according to claim 1, wherein a synchronizing signal is generated by a synchronization module (40) and fed to the camera (30) and to the first and second LIDAR (20; 22).

3. A controller (10) for tracking objects (50) in an environment (60) of an event, each moving object (50) comprising an associated identity marking (54) and different key portions (52), wherein the key portion (52) being used to determine which moving object (50) is first to finish, such as the nose of a horse or the chest of an athlete, the controller comprising a processor (12) and a non-transitory computer-readable medium (14), configured to store instructions (16), which when executed by the processor (12), cause the controller (10) to:
receive images from a camera (30) having a field-of-view in a section of the environment (60),
identify moving objects (50) in the received images and separate these moving objects from a background of the environment,
determine position coordinates of the associated identity markings (54) and the different key portions (52) of each moving object (50),
receive a first set of data points representing position coordinates in a field of view of a first Light Detection And Ranging, LIDAR, device (20),
receive a second set of data points representing position coordinates in a field of view of a second LIDAR device (22), the field of view of the second LIDAR device (22) is partly overlapping the field of view of the first LIDAR device (20),
separate data points representing the moving objects (50) from data points representing a background for each of the first and the second set of data points,
model the position of each moving object (50) as a two-dimensional probabilistic distribution,
calculate a weighted mean value for the position coordinates of the moving objects (50) based on the first and second set of data points giving more weight to the set of data points that represents moving objects closest to one of the first and second LIDAR device (20; 22), wherein the weighted mean is calculated as inversely proportional to the variances of the moving objects (50), and
reconstruct the position in the environment (60) and the associated identity marking (54) for the moving objects in a particular point of time.

4. A computer program (16) comprising computer program code, the computer program code being adapted, if executed on a processor (34), to implement the method according to any one of the claims 1 to 2.

5. A computer program product comprising a computer readable storage medium (17), the computer readable storage medium having the computer program (18) according to claim 4.

## Patentansprüche

1. Verfahren zum Verfolgen beweglicher Objekte (50) in einer Umgebung (60) eines Ereignisses, wobei jedes bewegliche Objekt (50) eine zugehörige Identitätsmarkierung (54) und verschiedene Schlüsselabschnitte (52) umfasst, wobei der Schlüsselabschnitt (52) verwendet wird, um zu bestimmen, welches bewegliche Objekt (50) als erstes am Ziel ist, wie etwa die Nase eines Pferdes oder die Brust eines Athleten, wobei das Verfahren von einer Steuereinheit (10) durchgeführt wird und umfasst:
Empfangen (S100) von Bildern von einer Kamera (30), die ein Sichtfeld in einem Abschnitt der Umgebung (60) aufweist,
Identifizieren (S102) beweglicher Objekte (50) in den empfangenen Bildern und Trennen dieser beweglichen Objekte von einem Hintergrund der Umgebung,
Bestimmen (S104) von Positionskoordinaten der zugehörigen Identitätsmarkierungen (54) und der verschiedenen Schlüsselabschnitte (52) jedes beweglichen Objekts (50),
Empfangen (S106) eines ersten Satzes von Datenpunkten, die Positionskoordinaten in einem Sichtfeld einer ersten Light Detection And Ranging-, LIDAR-Vorrichtung (20) darstellen,
Empfangen (S108) eines zweiten Satzes von Datenpunkten, die Positionskoordinaten in einem Sichtfeld einer zweiten LIDAR-Vorrichtung (22) darstellen, wobei das Sichtfeld der zweiten LIDAR-Vorrichtung (22) das Sichtfeld der ersten LIDAR-Vorrichtung (20) teilweise überlappt,
Trennen (S110) von Datenpunkten, welche die beweglichen Objekte (50) darstellen, von Datenpunkten, die einen Hintergrund für sowohl den ersten als auch zweiten Satz von Datenpunkten darstellen,
Modellieren (S111) der Position jedes beweglichen Objekts (50) als eine zweidimensionale Wahrscheinlichkeitsverteilung,
Berechnen (S112) eines gewichteten Mittelwerts für die Positionskoordinaten der beweglichen Objekte (50) basierend auf dem ersten und zweiten Satz von Datenpunkten, wobei dem Satz von Datenpunkten, der bewegliche Objekte darstellt, die einer von der ersten und zweiten LIDAR-Vorrichtung (20; 22) am nächsten sind, mehr Gewicht beigemessen wird, wobei der gewichtete Mittelwert umgekehrt proportional zu den Abweichungen der beweglichen Objekte (50) berechnet wird, und
Rekonstruieren (S114) der Position in der Umgebung (60) und der zugehörigen Identitätsmarkierung (54) für die beweglichen Objekte zu einem bestimmten Zeitpunkt.

2. Verfahren nach Anspruch 1, wobei ein Synchronisierungssignal durch ein Synchronisierungsmodul (40) erzeugt wird und der Kamera (30) und dem ersten und zweiten LIDAR (20; 22) zugeführt wird.

3. Steuereinheit (10) zum Verfolgen von Objekten (50) in einer Umgebung (60) eines Ereignisses, wobei jedes bewegliche Objekt (50) eine zugehörige Identitätsmarkierung (54) und verschiedene Schlüsselabschnitte (52) umfasst, wobei der Schlüsselabschnitt (52) verwendet wird, um zu bestimmen, welches bewegliche Objekt (50) als erstes am Ziel ist, wie etwa die Nase eines Pferdes oder die Brust eines Athleten, wobei die Steuereinheit einen Prozessor (12) und ein nicht flüchtiges computerlesbares Medium (14) umfasst, das konfiguriert ist, um Anweisungen (16) zu speichern, die, wenn sie vom Prozessor (12) ausgeführt werden, die Steuereinheit (10) veranlassen:
Bilder von einer Kamera (30), die ein Sichtfeld in einem Abschnitt der Umgebung (60) aufweist, zu empfangen,
bewegliche Objekte (50) in den empfangenen Bildern zu identifizieren und diese beweglichen Objekte von einem Hintergrund der Umgebung zu trennen,
Positionskoordinaten der zugehörigen Identitätsmarkierungen (54) und der verschiedenen Schlüsselabschnitte (52) jedes beweglichen Objekts (50) zu bestimmen,
einen ersten Satz von Datenpunkten, die Positionskoordinaten in einem Sichtfeld einer ersten Light Detection And Ranging-, LIDAR-Vorrichtung (20) darstellen, zu empfangen,
einen zweiten Satz von Datenpunkten, die Positionskoordinaten in einem Sichtfeld einer zweiten LIDAR-Vorrichtung (22) darstellen, zu empfangen, wobei das Sichtfeld der zweiten LIDAR-Vorrichtung (22) das Sichtfeld der ersten LIDAR-Vorrichtung (20) teilweise überlappt,
Datenpunkte, die die beweglichen Objekte (50) darstellen, von Datenpunkten zu trennen, die einen Hintergrund für sowohl den ersten als auch zweiten Satz von Datenpunkten darstellen,
die Position jedes beweglichen Objekts (50) als zweidimensionale Wahrscheinlichkeitsverteilung zu modellieren,
einen gewichteten Mittelwert für die Positionskoordinaten der beweglichen Objekte (50) basierend auf dem ersten und zweiten Satz von Datenpunkten zu berechnen, wobei dem Satz von Datenpunkten, der bewegliche Objekte darstellt, die einer von der ersten und zweiten LIDAR-Vorrichtung (20; 22) am nächsten sind, mehr Gewicht beigemessen wird, wobei der gewichtete Mittelwert umgekehrt proportional zu den Abweichungen der beweglichen Objekte (50) berechnet wird, und
die Position in der Umgebung (60) und die zugehörige Identitätsmarkierung (54) für die beweglichen Objekte zu einem bestimmten Zeitpunkt zu rekonstruieren.

4. Computerprogramm (16), das einen Computerprogrammcode umfasst, wobei der Computerprogrammcode angepasst ist, wenn er auf einem Prozessor (34) ausgeführt wird, das Verfahren nach einem der Ansprüche 1 bis 2 umzusetzen.

5. Computerprogrammprodukt, das ein computerlesbares Speichermedium (17) umfasst, wobei das computerlesbare Speichermedium das Computerprogramm (18) nach Anspruch 4 aufweist.

## Revendications

1. Procédé de suivi d'objets mobiles (50) dans un environnement (60) d'un événement, chaque objet mobile (50) comprenant un marquage d'identité associé (54) et différentes parties clés (52), dans lequel la partie clé (52) est utilisée pour déterminer quel objet mobile (50) est le premier à terminer, tel que le nez d'un cheval ou la poitrine d'un athlète, ledit procédé étant exécuté par un dispositif de commande (10) et comprenant :
la réception (S100) d'images provenant d'une caméra (30) présentant un champ de vision dans une section de l'environnement (60),
l'identification (S102) d'objets mobiles (50) dans les images reçues et la séparation de ces objets mobiles d'un arrière-plan de l'environnement,
la détermination (S104) de coordonnées de position des marquages d'identité associés (54) et des différentes parties clés (52) de chaque objet mobile (50),
la réception (S106) d'un premier ensemble de points de données représentant des coordonnées de position dans un champ de vision d'un premier dispositif de détection et de télémétrie par la lumière, LIDAR (20),
la réception (S108) d'un second ensemble de points de données représentant des coordonnées de position dans un champ de vision d'un second dispositif LIDAR (22), le champ de vision du second dispositif LIDAR (22) chevauche partiellement le champ de vision du premier dispositif LIDAR (20),
la séparation (S110) de points de données représentant les objets mobiles (50) de points de données représentant un arrière-plan pour chacun du premier et du second ensemble de points de données,
la modélisation (S111) de la position de chaque objet mobile (50) sous la forme d'une distribution probabiliste bidimensionnelle,
le calcul (S112) d'une valeur moyenne pondérée pour les coordonnées de position des objets mobiles (50) sur la base des premier et second ensembles de points de données en donnant plus de poids à l'ensemble de points de données qui représente les objets mobiles les plus proches de l'un des premier et second dispositifs LIDAR (20 ; 22), dans lequel la moyenne pondérée est calculée comme étant inversement proportionnelle aux variances des objets mobiles (50), et
la reconstruction (S114) de la position dans l'environnement (60) et le marquage d'identité associé (54) pour les objets mobiles à un instant donné.

2. Procédé selon la revendication 1, dans lequel un signal de synchronisation est généré par un module de synchronisation (40) et envoyé à la caméra (30) et aux premier et second LIDAR (20 ; 22).

3. Dispositif de commande (10) pour suivre des objets (50) dans un environnement (60) d'un événement, chaque objet mobile (50) comprenant un marquage d'identité associé (54) et différentes parties clés (52), dans lequel la partie clé (52) est utilisée pour déterminer quel objet mobile (50) est le premier à terminer, tel que le nez d'un cheval ou la poitrine d'un athlète, le dispositif de commande comprenant un processeur (12) et un support lisible par ordinateur non transitoire (14), configuré pour stocker des instructions (16) qui, lorsqu'elles sont exécutées par le processeur (12), amènent le dispositif de commande (10) à :
recevoir des images provenant d'une caméra (30) présentant un champ de vision dans une section de l'environnement (60),
identifier des objets mobiles (50) dans les images reçues et séparer ces objets mobiles d'un arrière-plan de l'environnement,
déterminer des coordonnées de position des marquages d'identité associés (54) et des différentes parties clés (52) de chaque objet mobile (50),
recevoir un premier ensemble de points de données représentant des coordonnées de position dans un champ de vision d'un premier dispositif de détection et de télémétrie par la lumière, LIDAR (20),
recevoir un second ensemble de points de données représentant des coordonnées de position dans un champ de vision d'un second dispositif LIDAR (22), le champ de vision du second dispositif LIDAR (22) chevauche partiellement le champ de vision du premier dispositif LIDAR (20),
séparer des points de données représentant les objets mobiles (50) de points de données représentant un arrière-plan pour chacun du premier et du second ensemble de points de données,
modéliser la position de chaque objet mobile (50) sous la forme d'une distribution probabiliste bidimensionnelle,
calculer une valeur moyenne pondérée pour les coordonnées de position des objets mobiles (50) sur la base des premier et second ensembles de points de données en donnant plus de poids à l'ensemble de points de données qui représente les objets mobiles les plus proches de l'un des premier et second dispositifs LIDAR (20 ; 22), dans lequel la moyenne pondérée est calculée comme étant inversement proportionnelle aux variances des objets mobiles (50), et
reconstruire la position dans l'environnement (60) et le marquage d'identité associé (54) pour les objets mobiles à un instant donné.

4. Programme informatique (16) comprenant un code de programme informatique, le code de programme informatique étant adapté, s'il est exécuté sur un processeur (34), pour mettre en oeuvre le procédé selon l'une quelconque des revendications 1 à 2.

5. Produit de programme informatique comprenant un support de stockage lisible par ordinateur (17), le support de stockage lisible par ordinateur contenant le programme informatique (18) selon la revendication 4.
